(19) Europäisches Patentamt
European Patent Office
Office européen des brevets

(11) **EP 1 348 342 B1**

(12) **EUROPEAN PATENT SPECIFICATION**

(45) Date of publication and mention
of the grant of the patent:
**28.11.2007 Bulletin 2007/48**

(51) Int Cl.:
*A23G 9/28* (2006.01)   *A23G 9/22* (2006.01)

(21) Application number: **03251333.5**

(22) Date of filing: **05.03.2003**

(54) **Process for dispensing portions of frozen aerated edible products**

Verfahren zur portionierten Abgabe von essbaren lufthaltigen gefrorenen Produkten

Procédé de débit en portions de produits congelés foisonnés et commestibles

(84) Designated Contracting States:
**AT BE BG CH CY CZ DE DK EE ES FI FR GB GR
HU IE IT LI LU MC NL PT RO SE SI SK TR**

(30) Priority: **28.03.2002 EP 02252321**

(43) Date of publication of application:
**01.10.2003 Bulletin 2003/40**

(73) Proprietors:
• **UNILEVER PLC**
**London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR HU IT LI
LU MC NL PT RO SE SI SK TR**

(72) Inventors:
• **Binley, Gary Norman**
**Bedford, MK44 1LQ (GB)**
• **Cockings, Terence R.L.**
**Bedford, MK44 1LQ (GB)**
• **Wang-Nolan, Wei**
**Santa Monica,**
**California 93455 (US)**

(74) Representative: **Hugot, Alain et al**
**Unilever Patent Group**
**Colworth House**
**Sharnbrook**
**Bedford, MK44 1LQ (GB)**

(56) References cited:
WO-A-00/36925          CA-A- 2 229 832
FR-A- 2 433 362        US-A- 2 190 226
US-A- 3 831 906        US-A- 4 031 262
US-A- 4 310 559        US-A- 4 645 093
US-A- 5 271 572

• **PATENT ABSTRACTS OF JAPAN vol. 2002, no.
02, 2 April 2002 (2002-04-02) & JP 2001 299228 A
(JOYPRO:KK), 30 October 2001 (2001-10-30)**
• **PATENT ABSTRACTS OF JAPAN vol. 014, no. 492
(C-0773), 26 October 1990 (1990-10-26) -& JP 02
203752 A (KANEBO LTD), 13 August 1990
(1990-08-13)**
• **PATENT ABSTRACTS OF JAPAN vol. 007, no. 122
(C-168), 26 May 1983 (1983-05-26) & JP 58 040043
A (MEIJI NIYUUGIYOU KK), 8 March 1983
(1983-03-08)**

**Description**

**Field of the invention**

The present invention relates to a process for dispensing portions of frozen aerated edible products such as soft-serve ice creams. The present invention more particularly relates to a process for dispensing frozen aerated products at point of sale.

**Background of the invention**

Frozen aerated products such as ice creams, have been produced industrially for many decades. They are manufactured in a continuous way leaving little or no possibility to change from one product to the other without stopping the manufacturing process. Such products have been known to contain inclusions such as fruit by introducing said inclusions into the aerated product, after it has been frozen but before it is packaged.

Soft serve ice creams have also been known for decades and whereas they epitomise the impulse and self indulgence market, they remain nevertheless extremely standard and the capability to change the product to meet the demands of individual consumers at the point of sale is still very limited. This may be done by adding chocolate for example a Cadbury 99 flakes™ on top of the product, after it has been dispensed in a cone. It can also be done by sprinkling additional toppings or sauces onto the top of the product. But these processes do not allow for making an individual portion of a frozen aerated product with particulate inclusions incorporated in it.

There is a demand from customers to obtain individualized product which are produced in front of them. Recently, a product appeared on the market under the name McFlurry™. It relies on a method wherein inclusions are introduced and stirred in a cup of soft serve ice cream. Due to the stirring required, it can not be done in a wafer cone and can only be done in a cup which is rigid enough to sustain stirring. Stirring ice cream in a crunchy wafer cone results in loss of swirly shape of the product and cone breakage, which are major drawbacks. In addition, the mixing device does not allow customers to see the inclusions while they are mixed into ice cream.

It has now been established that using specific processing steps and equipment, it is possible to deliver directly in front of the customer, a frozen aerated product with inclusions in a container such as a crunchy wafer cone. A wide range of inclusions, such as chocolate pieces, chopped nuts, etc., can be tailored to the customers requirements. The design of the device ensures minimum carryover from one customer to the next.

Frozen aerated product shall mean a frozen mixture of sweeteners, dairy/vegetable protein and fat, stabilizers, emulsifiers and flavouring with certain percentage of air (overrun) to deliver the desirable smoothness and softness. Frozen aerated product includes ice creams, frozen custard, frozen yoghurt, sorbet, etc.

Overrun shall mean percentage increase in volume of frozen aerated product greater than the amount of mix used to produce that frozen aerated product.

```
% overrun = (Volume of frozen aerated product - Volume of
mix used)/Volume of mix used*100%
```

Points of sale typically include ice cream vans, parlours and stands. It is a place for people to buy a product and consume it at or near that place.

Soft serve freezer shall mean an freezer located at a point of sale from which frozen aerated product is dispensed on demand in a stop-and-start mode.

Soft-serve frozen aerates product shall mean a frozen aerated product, for example an ice cream, dispensed from a soft serve freezer and consumed soon after dispensing without further storage. The temperature of the product as it is dispensed is usually between -5° and -9°C and the overrun is between 30 and 120%.

Particulate inclusions shall mean pieces greater than 1 mm as determined by a sieve test, preferably between 1mm and 10 mm, even more preferably between 2mm and 7 mm. Examples of suitable particulate inclusions include chopped/toasted nut pieces, chopped fresh fruits such as mango, banana and apple, frozen particulates (e.g. Solero Shots™, ice particles) and shaved chocolate pieces, etc.

Percentage of particulate inclusions means the percentage by weight of particulate inclusions introduced into the frozen aerated ice cream, based on the total weight of the product with its particulate inclusions.

## Brief description of the invention

1. It is the object of the present invention to provide a process for dispensing into a container a portion of a consumable product comprising a frozen aerated product with particulate inclusions of a specified size range wherein the process comprises the steps of;

- loading a serving of particulate inclusions of said specified size range into a supplying means
- metering the flow of a serving of frozen aerated product from a source of frozen aerated product through a mixing chamber
- transferring the serving of particulate inclusions from the supplying means to the mixing chamber throughout the time said serving of frozen aerated product is flowing through the mixing chamber
- mixing the particulate inclusions and the frozen aerated product to form the consumable product
- dispensing the consumable product into the container.

Preferably, the frozen aerated product is at a temperature of between -5°C and -9°C as it flows through the mixing chamber.

Preferably also, the portion of frozen aerated product is dispensed at a point of sale.

Preferably, the container is made out of an edible material, more preferably it is a wafer cone.

In a first embodiment of the invention, the frozen aerated product flows from the source of frozen aerated product until the portion of the consumable product has been fully dispensed into the container. It is a preferred embodiment of the invention that the flow of frozen aerated product is temporarily interrupted whilst the particulate inclusions are being introduced.

Preferably, 5 to 60% w/w (based on the total weight of the consumable product) of particulate inclusions, more preferably 5% to 30%, are introduced into the portion of aerated ice cream.

## Detailed description of the invention

The present invention will be further described by the following description of an embodiment thereof used to dispense portions of ice cream incorporating particulate inclusions. The description has reference to the accompanying drawings wherein;

Figure 1.a and Figure 1.b represent a 3 dimensional view of a manual vane feeder adapted to be fitted at the outlet of a source of frozen aerated ice cream;

Figure 2 represents a side view of the vane feeder as disclosed in Figure 1;

Figure 3 represents a front view of the vane feeder as disclosed in Figure 1;

Figure 4 represents a cross sectional view of the vane feeder as disclosed in figure 1.

In order to operate the invention, a vane feeder such as described in the figures can be fitted at the outlet of a source of frozen aerated ice cream. The source of frozen aerated ice cream is preferably a soft serve freezer.

The vane feeder has two inlets 1 and 2 and one outlet 3. The top inlet 1 forms part of the supplying means for the particulate inclusions, not represented, whereas the side inlet 2 is adapted to be fitted to a source of frozen aerated ice cream, not represented.

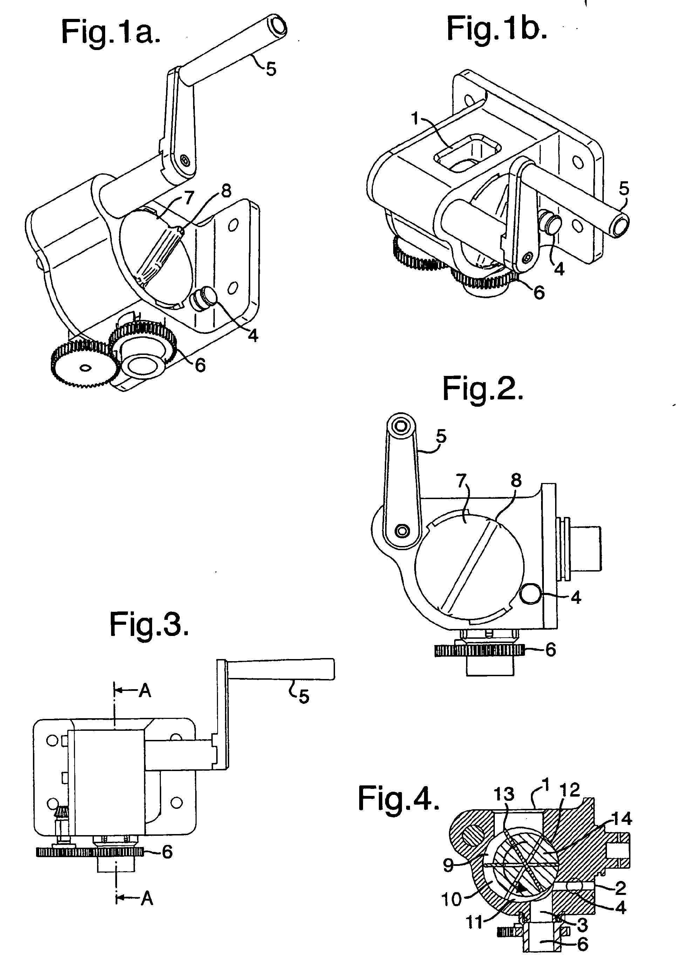

As can be particularly seen on Figure 4, a valve 4 commands the flow of frozen aerated ice cream from the inlet 2.

The vane feeder can be operated manually by a crankshaft 5 or automated via a small AC motor, not represented. This crankshaft 5 can also command valve 4. Optionally, the crankshaft 5 can be connected to a rotated nozzle 6 fitted at the outlet 3 in such a way that when the crankshaft is operated, the nozzle rotates.

In operation, a soft serve freezer which has been equipped with a vane feeder as described above is located at a point of sale. When a customer desires a soft serve ice cream, the customer can select the particulate inclusions as desired. is introduced into the supplying means from where the particulate inclusions can pass into the inlet 1 of the vane feeder. The particulate inclusions are carried into vane feeder cavities 9, 10 and 11 from the inlet 1 as the crankshaft 5 rotates. Rotation of the crankshaft 5 causes the opening of the valve 4 to allow the frozen ice cream to flow into the vane feeder cavity 11 where it is gently mixed with the particulate inclusions. The soft serve ice cream together with its inclusions passes through the outlet 3 and the rotating nozzle 6 before being dispensed in a container not represented but which is preferably a wafer cone.

When the required portion of soft ice cream together with its particulate inclusions has been dispensed, the crankshaft 5 is stopped leading to a complete closure of valve 4. As can be seen, in such an embodiment, the valve 4 will open and close several times while the portion of frozen aerated ice cream is dispensed. The opening of the valve 4 is synchronised with the vane feeder cavity 11 by a carefully designed gear ratio, between the crankshaft 5 to the vane feeder cavity 11, and the vane feeder cavity 11 to the valve 4.

Because the vane feeder is exposed to the environment away from the cold sources (freezer), regular cleaning of the feeder is required. To make the device easy to clean , the vane feeder front cover 7 can be removed by simply twisting the grip handle 8 on the front cover, the vanes 12 (three vanes) and the rotor 14 can be pushed out the vane body 12 for thorough cleaning. After cleaning, the vanes 12 and the rotor 14 can be reassembled. Because the valve 4 remains closed, cleaning the vane feeder does not affect the freezer.

Example 1:

A vane feeder was adapted onto a Carpigani soft ice freezer (Model number AES 381/PSP Colore, Carpigiani Group Ali - S.p.a, Bologna, Italy). This model of Carpigiani freezer is normally equipped with a dispensing piston-cock . Instead of using the Carpigiani dispensing piston-cock and nozzle, the vane feeder is fitted onto the freezer using the position pins provided on the freezer.

A commercial ice cream mix, Country Meadow, was used to make ice cream at 50% overrun and -7°C. A serving of shaved chocolate pieces (5 grams) were loaded into the inlet 1. The freezer mix pump and refrigeration were trigged as the ice cream together with inclusions was dispensed into a crunchy wafer cone. The overall weight of the product including the wafer cone (11 g) is 100 g.

In another instance, 10 grams of diced banana (size of pieces about 1 cm cube) were loaded into the inlet 1. Ice cream and the inclusions were dispensed out of the outlet 3.

In another instance, 5 grams of toasted hazelnut pieces (size 3 mm) and 3 grams of chocolate pieces were loaded into the inlet 1 and dispensed into a cup (5g). The overall weight of products including the cup is 80 g.

**Claims**

1. A process for dispensing into a container a portion of a consumable product comprising a frozen aerated product with particulate inclusions of a specified size range wherein the process comprises the steps of;

   • loading a serving of particulate inclusions of said specified size range into a supplying means
   • metering the flow of a serving of frozen aerated product from a source of frozen aerated product through a mixing chamber
   • transferring the serving of particulate inclusions from the supplying means to the mixing chamber throughout the time said serving of frozen aerated product is flowing through the mixing chamber
   • mixing the particulate inclusions and the frozen aerated product to form the consumable product
   • dispensing the consumable product into the container.

2. Process according to claim 1 wherein the frozen aerated product is at a temperature of between -5°C and -9°C as it flows into the mixing chamber.

3. Process according to claim 1 wherein the portion of frozen aerated product is dispensed at a point of sale.

4. Process according to claim 1 wherein the container is made out of an edible material.

5. Process according to any preceding claim wherein 5 to 60 % w/w (based on the total weight of consumable product) of particulate inclusions, are introduced into the portion of frozen aerated product.

6. Equipment for dispensing into a container a portion of a consumable product comprising a frozen aerated product with particulate inclusions of a specified size range comprising;

   • a source of frozen aerated product
   • supplying means into which is loaded a serving of particulate inclusions of said specified size range
   • a mixing chamber in which the frozen aerated product and the particulate inclusions are mixed
   • metering means controlling the flow of a serving of frozen aerated product from the source of frozen aerated product through the mixing chamber
• transferring means to transfer the serving of particulate inclusions from the supplying means to the mixing chamber throughout the time said serving of frozen aerated product is flowing through the mixing chamber
• means for dispensing the consumable product into the container

7. Equipment according to claim 6 in which the source of frozen aerated product is a soft serve freezer

8. Equipment according to claim 6 in which the transferring means comprises a vane feeder.

9. Equipment according to claim 8 in which a chamber of the vane feeder is the mixing chamber.


**Patentansprüche**

1. Verfahren zur Abgabe einer Portion eines verzehrbaren Produkts in einen Behälter, welches Produkt ein gefrorenes, mit Luft versetztes Produkt mit teilchenförmigen Einschlüssen eines vorgegebenen Größenbereichs umfasst, wobei das Verfahren die Schritte aufweist:

   • Laden einer Portion teilchenförmiger Einschlüsse des vorgegebenen Größenbereichs in eine Zuführeinrichtung,
   • Dosieren des Flusses einer Portion des gefrorenen, mit Luft versetzten Produkts von einer Quelle des gefrorenen, mit Luft versetzten Produkts durch eine Mischkammer,
   • Transferieren der Portion der teilchenförmigen Einschlüsse aus der Zuführeinrichtung in die Mischkammer während der gesamten Zeit, während welcher die Portion des gefrorenen, mit Luft versetzten Produkts durch die Mischkammer fließt,
   • Mischen der teilchenförmigen Einschlüsse und des gefrorenen, mit Luft versetzten Produkts zur Bildung des verzehrbaren Produkts,
   • Abgeben des verzehrbaren Produkts in den Behälter.

2. Verfahren nach Anspruch 1, wobei das gefrorene, mit Luft versetzte Produkt eine Temperatur von zwischen -5°C und -9°C hat, während es durch die Mischkammer fließt.

3. Verfahren nach Anspruch 1, wobei die Portion des gefrorenen, mit Luft versetzten Produkts an einem Verkaufsort abgegeben wird.

4. Verfahren nach Anspruch 1, wobei der Behälter aus einem essbaren Material besteht.

5. Verfahren nach einem vorhergehenden Anspruch, wobei 5 bis 60 Gew.% (bezogen auf das Gesamtgewicht des verzehrbaren Produkts) teilchenförmige Einschlüsse in die Portion des gefrorenen, mit Luft versetzten Produkts eingebracht werden.

6. Einrichtung zur Abgabe einer Portion eines verzehrbaren Produkts, welches Produkt ein gefrorenes, mit Luft versetztes Produkt mit teilchenförmigen Einschlüssen eines vorgegebenen Größenbereichs umfasst, mit

   • einer Quelle des gefrorenen, mit Luft versetzten Produkts,
   • Zuführmitteln, in welche eine Portion teilchenförmiger Einschlüsse des vorgegebenen Größenbereichs geladen wird,
   • einer Mischkammer, in welcher das gefrorene, mit Luft versetzte Produkt und die teilchenförmigen Einschlüsse gemischt werden,
   • Dosiermitteln, die das Fließen einer Portion des gefrorenen, mit Luft versetzten Produkts von der Quelle des gefrorenen, mit Luft versetzten Produkts durch die Mischkammer steuern,
   • Transfermitteln zum Transferieren der Portion der teilchenförmigen Einschlüsse aus den Zuführmitteln in die Mischkammer während der gesamten Zeit, während welcher die Portion des gefrorenen, mit Luft versetzten Produkts durch die Mischkammer fließt,
   • Mitteln zum Abgeben des verzehrbaren Produkts in den Behälter.

7. Einrichtung nach Anspruch 6, bei welcher die Quelle des gefrorenen, mit Luft versetzten Produkts ein Gefriergerät für Soft-Produkte ist.

**8.** Einrichtung nach Anspruch 6, bei welcher das Transfermittel ein Schaufel-Fördergerät aufweist.

**9.** Einrichtung nach Anspruch 8, bei welcher eine Kammer des Schaufel-Fördergeräts die Mischkammer ist.

**Revendications**

**1.** Procédé de distribution dans un conteneur d'une portion d'un produit consommable comprenant un produit aéré congelé avec des inclusions particulaires d'une taille spécifiée, dans lequel le procédé comprend les étapes consistant à :

- charger une part d'inclusions particulaires de ladite taille dans un moyen d'alimentation ;
- mesurer le flux d'une part de produit aéré congelé provenant d'une source de produit aéré congelé à travers une chambre de mélange ;
- transférer la part d'inclusions particulaires du moyen d'alimentation à la chambre de mélange pendant tout le temps où ladite part de produit aéré congelé s'écoule à travers la chambre de mélange ;
- mélanger les inclusions particulaires et le produit aéré congelé pour former le produit consommable ;
- distribuer le produit consommable dans le conteneur.

**2.** Procédé selon la revendication 1, dans lequel le produit aéré congelé est à une température comprise entre -5°C et -9°C quand il s'écoule dans la chambre de mélange.

**3.** Procédé selon la revendication 1, dans lequel la portion de produit aéré congelé est distribuée à un point de vente.

**4.** Procédé selon la revendication 1, dans lequel le conteneur est constitué d'un matériau comestible.

**5.** Procédé selon l'une quelconque des revendications ci-dessus, dans lequel 5 à 60% en poids (sur la base du poids total de produit consommable) des inclusions particulaires, sont introduites dans la portion de produit aéré congelé.

**6.** Équipement pour distribuer dans un conteneur une portion de produit consommable comprenant un produit aéré congelé avec des inclusions particulaires d'une taille spécifiée, comprenant :

- une source de produit aéré congelé ;
- un moyen d'alimentation dans lequel est chargée une part d'inclusions particulaires de ladite taille spécifiée ;
- une chambre de mélange dans laquelle le produit aéré congelé et les inclusions particulaires sont mélangés ;
- un moyen de mesure contrôlant le flux d'une part de produit aéré congelé depuis la source de produit aéré congelé à travers la chambre de mélange
- un moyen de transfert de la part d'inclusions particulaires du moyen d'alimentation à la chambre de mélange pendant tout le temps pendant lequel ladite part de produit aéré congelé passe à travers la chambre de mélange ;
- un moyen pour distribuer le produit consommable dans le conteneur.

**7.** Équipement selon la revendication 6, dans lequel la source de produit aéré congelé est un congélateur pour produits tendres.

**8.** Équipement selon la revendication 6, dans lequel le moyen de transfert comprend un système d'alimentation à palette.

**9.** Équipement selon la revendication 8, dans lequel une chambre du système d'alimentation à palette est la chambre de mélange.

Fig.1a.

Fig.1b.

Fig.2.

Fig.3.

Fig.4.